Europäisches Patentamt

European Patent Office

Office européen des brevets

(19)

(11) Veröffentlichungsnummer : **0 340 561 B1**

(12) # EUROPÄISCHE PATENTSCHRIFT

(45) Veröffentlichungstag der Patentschrift :
**20.05.92 Patentblatt 92/21**

(51) Int. Cl.$^5$ : **B01D 19/02**

(21) Anmeldenummer : **89107205.0**

(22) Anmeldetag : **21.04.89**

(54) **Streifenförmiger Träger aus Natur-und/oder Synthesefasern.**

Verbunden mit 89904800.3/0411004
(europäische
Anmeldenummer/Veröffentlichungsnummer)
durch Entscheidung vom 25.06.91.

(30) Priorität : **30.04.88 DE 3814707**

(43) Veröffentlichungstag der Anmeldung :
**08.11.89 Patentblatt 89/45**

(45) Bekanntmachung des Hinweises auf die
Patenterteilung :
**20.05.92 Patentblatt 92/21**

(84) Benannte Vertragsstaaten :
**AT BE CH DE ES FR GB GR IT LI LU NL SE**

(56) Entgegenhaltungen :
**DE-A- 1 419 683**
**FR-A- 2 236 517**

(73) Patentinhaber : **Henkel**
**Kommanditgesellschaft auf Aktien**
**Postfach 1100 Henkelstrasse 67**
**W-4000 Düsseldorf 1 (DE)**

(72) Erfinder : **Osberghaus, Rainer, Dr.**
**Südallee 47**
**W-4000 Düsseldorf (DE)**
Erfinder : **Kresse, Franz**
**Am Bruchhauser Kamp 12**
**W-4010 Hilden (DE)**
Erfinder : **Scheller, Bernfrid**
**Beethovenstrasse 110**
**W-5024 Pulheim (DE)**

EP 0 340 561 B1

**Beschreibung**

Die Erfindung betrifft einen streifenförmigen Träger aus Natur- und/oder Synthesefasern in Form eines Vlieses, Gewebes oder Gewirkes, welcher zur Verwendung mit schäumenden Reinigungsmitteln mit schaumdämpfenden chemischen Wirksubstanzen beladen ist.

Ein solcher Träger ist aus der DE-OS 35 27 089 der Anmelderin bekannt. Dabei ist der Träger beispielsweise mit schaumdämpfenden Mitteln aus der Gruppe Paraffinöle, Wachse, Fettsäureester, Trialkylmelamine, Silikonöle und deren Mischungen oberflächlich beladen. Wird ein derartiger Träger nun in eine an sich schäumende Reinigungsflüssigkeit oder dgl. eingebracht, so tritt keine oder nur eine wesentlich geringere Schäumung auf.

Die Verpackung eines Trägers der betreffende Art stellt ein bisher ungelöstes Problem dar. Je nach Menge und Beschaffenheit der Wirksubstanz weist der Träger eine feuchte, klebrige oder schmierige Oberfläche auf, was dazu führt, daß der Träger beim Auspacken am Verpackungsmaterial kleben bleibt bzw. daß der Benutzer beim Auspacken mit der Wirksubstanz in Hautkontakt gerät, was sogar zur Ablehnung eines derartigen Produktes führen kann. Außerdem können beim Auspacken des Trägers bereits Wirksubstanzen austreten (z.B. durch Verdampfung), so daß die Lebensdauer des Trägers unnötig verkürzt wird.

Aufgabe der Erfindung ist die Schaffung einer Lösung, mit welcher ein derartiger Träger vor dem Gebrauch, also vor einem Inkontaktbringen mit Reinigungsmitteln, in handhabbarer Weise mit möglichst geringem Raumbedarf verpackt werden und vor dem Gebrauch keinerlei schaumdämpfende Wirkstoffe abgeben kann.

Diese Aufgabe wird mit einem Träger der eingangs bezeichneten Art erfindungsgemäß dadurch gelöst, daß der Träger in zusammengepackter Form in einer geschlossenen wasserlöslichen Folie angeordnet ist und somit zur Entfaltung seiner vollen Oberfläche erst beim Kontakt mit den Reinigungsmitteln kommt.

Diese Verpackung des Trägers führt zu einer erheblichen Verbesserung der Handhabbarkeit desselben. Der Benutzer gerät beim Einsetzen des Trägers in einen Reinigungsapparat oder dgl. nicht in Handkontakt mit der mit Wirksubstanz beladenen Oberfläche, sondern lediglich mit den hautfreundlichen, wasserlöslichen Folie. Diese Folie löst sich beim Inkontaktkommen mit dem Reinigungsmittel auf, so daß die Wirksubstanz des Trägers an das Reinigungsmittel abgegeben werden kann. Durch die zusammengepackte Form des Trägers in der Folie wird der Raumbedarf weitgehend eingeschränkt. Dabei entfaltet der Träger aufgrund der Strömung des Reinigungsmittels bzw. seiner eigenen Schwerkraft erst nach Auflösung der Folie seine volle Oberfläche und gibt erst dann seine Wirksubstanzer ab.

Est ist besonders zweckmäßig, wenn der Träger in seiner Längserstreckung Ziehharmonika-förmig zusammengefaltet ist. Diese Art der Faltung ermöglicht insbesondere bei Anordnung eines Trägers in einem von schäumender Flüssigkeit durchströmten Rohr eine besonders schnelle und zuverlässig vollständige Entfaltung des Trägers.

Es kann auch vorgesehen sein, daß der Träger in seiner Quererstreckung mehrlagig zusammengefaltet ist. Diese Ausführung ist insbesondere für breitere Träger vorgesehen, um den Raumbedarf im verpackten Zustand möglichst herabzusetzen.

Es ist besonders günstig, wenn am Träger eine aus der Folie herausragende Befestigungsvorrichtung angeordnet ist. Mit dieser Befestigungsvorrichtung kann der Träger an einer bestimmten Stelle eines Reinigungsapparates oder eines von Reinigungsmittel durchströmten Rohres befestigt werden. Gleichzeitig kann der Träger nach Erschöpfung seiner Wirksamkeit ohne Handkontakt mittels der Befestigungsvorrichtung wieder entnommen werden.

In einer besonders einfachen und günstigen Ausgestaltung der Erfindung ist vorgesehen, daß die Befestigungsvorrichtung als Schnur mit endseitigen Widerhaken ausgebildet ist. Dabei ist der eine Widerhaken durch den Träger gesteckt, während der andere zur Befestigung dient.

Die Erfindung sieht auch eine Verwendung des vorbeschriebenen Trägers zur Schaumdämpfung im Ansaugrohr eines Sprühextraktionsgerätes vor. Der Einsatz eines derart verpackten Trägers in einem solchen Gerät ist besonders geeignet. Dabei wird mittels eines Sprühextraktionsgerätes zunächst eine zu reinigende Fußbodenfläche mit einer Reinigungsflüssigkeit eingesprült und im selben Arbeitsgang durch Absaugen wieder davon befreit. Durch die Anordnung des Trägers in der Saugleitung wird vermieden, daß ein Aufschäumen erfolgt, wodurch der Sammelbehälter des Gerätes in kürzester Zeit vollständig gefüllt wäre und dementsprechend andauernd geleert werden müßte.

Die Erfindung ist nachstehend anhand der Zeichnung beispielsweise näher erläutert. Diese zeigt jeweils in perspektivischer Darstellung in

Fig. 1 das Einsetzen eines erfindungsgemäß verpackten Trägers in eine Ansaugleitung, in
Fig. 2 den Träger im eingesetzten Zustand vor dem Durchströmen der Ansaugleitung mit schäumenden Reinigungsmitteln, in
Fig. 3 dieselbe Ausführungsform wie in Fig. 2 während des Durchströmens, in

Fig. 4 eine weitere Ausführungsform der Erfindung vor dem Durchströmen und in

Fig. 5 dieselbe Ausführungsform wie in Fig. 4 während des Durchströmens.

Ein langgestreckter streifenförmiger Träger 1, der mit schaumdämpfenden chemischen Wirksubstanzen beladen ist, ist in zusammengefalteter Form in einer wasserlöslichen Folie 2 verpackt. An einem Ende des Trägers 1 ist eine Befestigungsschnur 3 angeordnet, die an einem Ende mit einem Widerhaken 4 versehen ist, wodurch die Befestigung am Träger 1 gewährleistet ist. Die Schnur 3 ist aus der Folie 2 geführt, wobei eine Durchtrittsstelle 5 der Folie 2 zugeschweißt ist, so daß in die Folie 2 keine Luft eindringen kann.

Am anderen Ende der Befestigungsschnur 3 ist ebenfalls ein Widerhaken 6 zur Befestigung angeordnet.

Eine Ansaugleitung 7 eines nicht näher dargestellten Sprühextraktionsgerätes besteht aus zwei ineinanderschiebbaren Rohren 8 und 9. Dabei weisen die Rohre 8, 9 zum Ineinanderschieben konische Endbereiche 10, 11 auf.

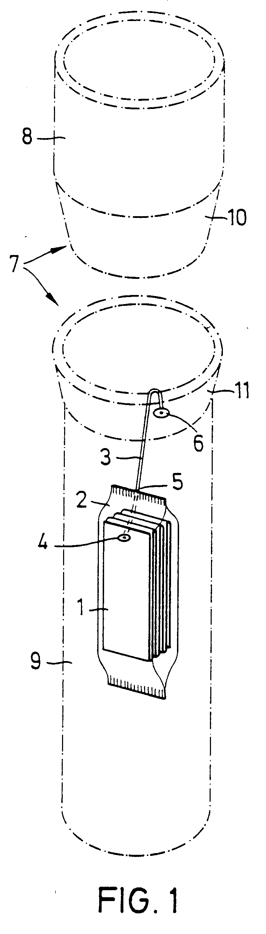

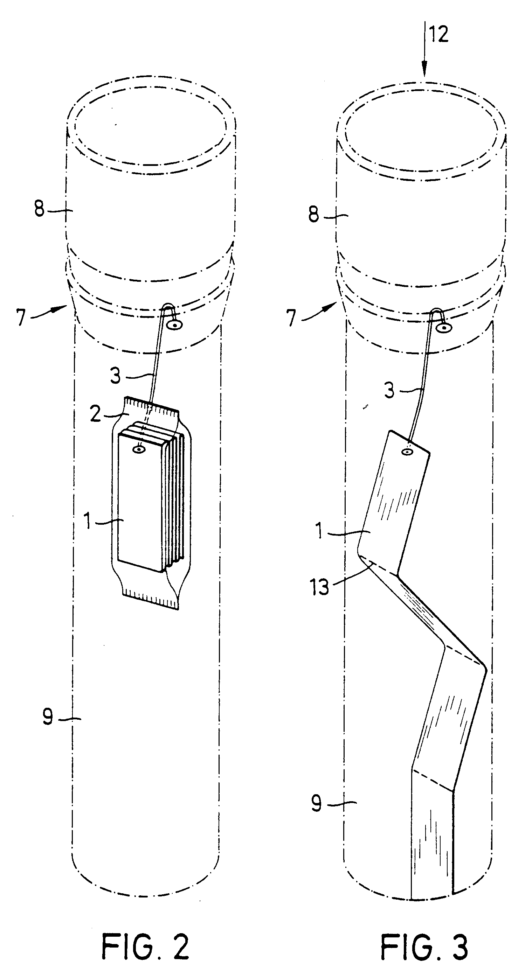

Zum Einsetzen des Trägers 1 in die Ansaugleitung 7 werden die beiden Rohre 8, 9 auseinander gezogen und der in der Folie 2 befindliche Träger 1 mittels der Befestigungsschnur 3 in das untere Rohr eingehängt, wie in Fig. 1 dargestellt. Nach dem Einhängen (Fig. 2) wird das obere Rohr 8 mit seinem konischen Endbereich 10 in den Endbereich 11 des Rohres 9 eingeschoben, so daß der Träger 1 fixiert in der Ansaugleitung 7 hängt. Selbstverständlich könnte die Ansaugleitung 7 auch in einer von der in der Zeichnung dargestellten vertikalen Position abweichenden Stellung angeordnet sein.

In Fig. 2 ist der Träger 1 im in die Ansaugleitung 7 eingesetzten Zustand dargestellt, wobei noch keine Reinigungsmittelströmung durch die Ansaugleitung 7 stattgefunden hat. Der Träger 1 ist in seiner Längserstreckung Ziehharmonika-förmig zusammengefaltet in der Folie 2 angeordnet.

Fig. 3 zeigt den Träger 1 im vom Reinigungsmittel durchströmten Zustand der Ansaugleitung 7, wobei die Strömungsrichtung durch den Pfeil 12 angedeutet ist. Aufgrund des Kontaktes mit dem Reinigungsmittel hat sich die Folie 2 aufgelöst und der Träger 1 aus seiner Ziehharmonika-förmigen Faltposition (gestrichelte Faltlinien 13) in Längsrichtung durch den Strömungsvorgang entfaltet.

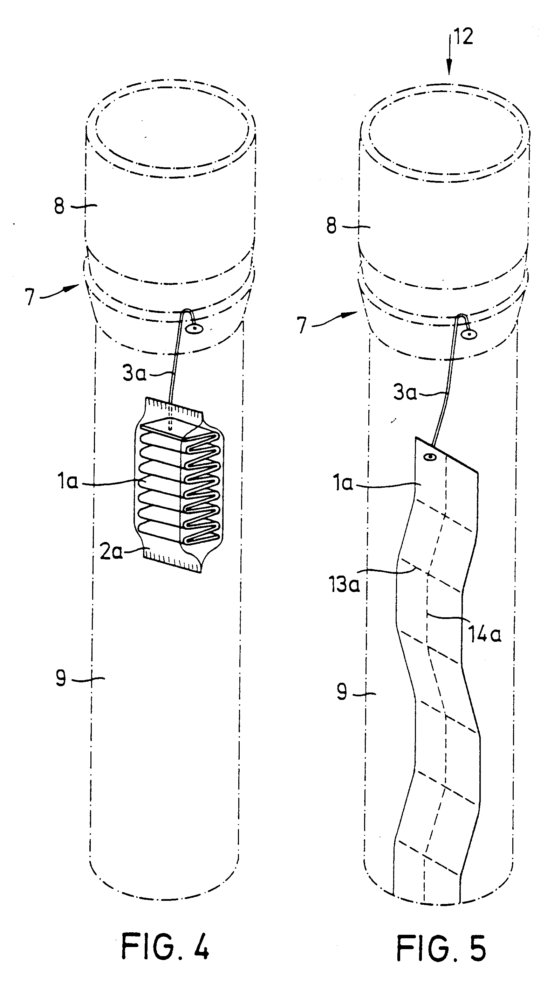

In den Fig. 4 und 5 ist ein weiteres Ausführungsbeispiel des Trägers dargestellt, wobei die den Träger und seine Verpackung betreffenden Bezugszeichen mit dem zusätzlichen Index "a" versehen sind. Der gegenüber dem in den Fig. 1 bis 3 dargestellten Träger 1 eine größere Quererstreckung aufweisende Träger 1a ist in Längsrichtung Ziehharmonika-förmig gefaltet und in Querrichtung zusätzlich einseitig gefaltet und in diesem Zustand in der Folie 2a angeordnet. Nach der Auflösung der Folie 2a durch das Reinigungsmittel (Fig. 5) wird der Träger 1a aufgrund der Strömung entfaltet, wobei die Art der vorherigen Faltung durch gestrichelte Linien 13a, 14a angedeutet ist.

Natürlich ist die Erfindung nicht auf die in der Zeichnung dargestellten Ausführungsbeispiele beschränkt. Weitere Ausgestaltungen der Erfindung sind möglich, ohne den Grundgedanken zu verlassen. So könnte der Träger auch auf andere Weise, z.B. durch Aufrollen oder dgl., in der Folie angeordnet sein und dgl. mehr.

## Patentansprüche

1. Streifenförmiger Träger aus Natur- und/oder Synthesefasern in Form eines Vlieses, Gewebes oder Gewirkes, welcher zur Verwendung mit schäumenden Reinigungsmitteln mit schaumdämpfenden chemischen Wirksubstanzen beladen ist, dadurch gekennzeichnet, daß der Träger (1) in zusammengepackter Form in einer geschlossenen wasserlöslichen Folie (2) angeordnet ist und somit zur Entfaltung seiner vollen Oberfläche erst bei Kontakt mit den Reinigungsmitteln kommt.

2. Träger nach Anspruch 1, dadurch gekennzeichnet, daß dieser in seiner Längserstreckung Ziehharmonika-förmig (13) zusammengefaltet ist.

3. Träger nach Anspruch 1 oder 2, dadurch gekennzeichnet, daß dieser in seiner Quererstreckung mehrlagig (14) zusammengefaltet ist.

4. Träger nach Anspruch 1 oder einem der folgenden, dadurch gekennzeichnet, daß am Träger (1) eine aus der Folie (2) herausragende Befestigungsvorrichtung (3) angeordnet ist.

5. Träger nach Anspruch 4, dadurch gekennzeichnet, daß die Befestigungsvorrichtung als Schnur (3) mit endseitigen Widerhaken (4,6) ausgebildet ist.

6. Verwendung eines Trägers nach Anspruch 1 oder einem der folgenden zur Schaumdämpfung im Ansaugrohr eines Sprühextraktionsgerätes.

## Claims

1. Strip-shaped support of natural and/or synthetic fibres in the form of a fleece or of a woven or knitted fabric, which is charged with foam-reducing chemical effective substances for use with foaming cleaning agents, characterised thereby, that the support (1) is arranged in packed-together form in a closed water-soluble foil (2) and thus comes to unfold its full surface only on contact with the cleaning agents.

2. Support according to claim 1, characterised thereby, that this folded together in its longitudinal extent in concertina fashion.

3. Support according to claim 1 or 2, characterised thereby, that this folded together in its transverse extent in several layers (14).

4. Support according to claim 1 or one of the following, characterised thereby, that a fastening device (3), which projects out from the foil (2), is arranged at the support (1).

5. Support according to claim 4, characterised thereby, that the fastening device is constructed as string (3) with barbs (4, 6) at the ends.

6. Use of a support according to claim 1 or one of the following for foam reduction in the induction tube of a spray-extracting device.

## Revendications

1. Support en bandes de fibres synthétiques et/ou naturelles sous forme d'un non-tisse, d'un tissu ou d'un tricot, charge de substances actives chimiques antimousses pour être utilise avec des produits détergents moussants, caractérisé par le fait que le support (1) est disposé sous forme compacte dans un film (2) fermé soluble dans l'eau et qu'il se déploie sur toute sa surface seulement lorsqu'il est en contact avec les produits détergents.

2. Support selon la revendication 1, caractérisé par le fait que sur son étendue longitudinale il est plié en accordéon (13).

3. Support selon l'une ou l'autre des revendications 1 ou 2, caractérisé par le fait que sur son étendue transversale il est plié en plusieurs couches (14).

4. Support selon l'une quelconque des revendications 1 à 3, caractérisé par le fait qu'un dispositif de fixation (3) dépassant du film (2) est disposé sur le support (1).

5. Support selon la revendication 4, caractérisé par le fait que le dispositif de fixation est réalisé sous forme d'une corde (3) comprenant à ses extrémités des éléments d'accrochage (4, 6).

6. Mode d'utilisation d'un support selon l'une quelconque des revendications 1 à 5, caractérisé par le fait que ce support est dispose en tant que produit antimousse à l'intérieur du tuyau d'aspiration d'un appareil extracteur à pulvérisation.

FIG. 1

FIG. 2

FIG. 3

FIG. 4    FIG. 5